# FASCICULE DE BREVET EUROPEEN

(11) **EP 1 498 309 B1**
(45) Date de publication et mention de la délivrance du brevet: **05.04.2006**
(21) Numéro de dépôt: 04291761.7
(22) Date de dépôt: 09.07.2004
(51) Int. Cl.: B60Q 1/076, H02P 8/00

(54) **Procédé de référencement dynamique d'un dispositif projecteur équipé d'un moteur pas à pas**
Verfahren zur dynamischen Referenzierung einer mit einem Schrittmotor ausgestatteten Scheinwerferanordnung
Method for dynamic referencing of a headlamp equipped with a stepping motor

(30) Priorité: 17.07.2003 FR 0308758
(43) Date de publication de la demande: 19.01.2005
(73) Titulaire: VALEO VISION, 93012 Bobigny Cédex (FR)
(72) Inventeur: Lesaffre, Olivier, 23600 Martos (Jaen) (ES); Moreno Fernandez, José, 14940 Cabra Cordoba (ES)
(74) Mandataire: Renous Chan, Véronique

(56) Documents cités:
- DE-A- 4 017 856
- US-A- 3 628 120

## Description

La présente invention a pour objet un procédé de référencement dynamique d'un dispositif projecteur équipé d'un moteur pas à pas, essentiellement destiné à être utilisé dans les dispositifs projecteurs de véhicule automobile. L'invention a essentiellement pour but de proposer une amélioration dans les processus de référencement des moteurs pas à pas, notamment en rendant les opérations de référencement plus discrètes vis à vis des conducteurs, sans pour autant utiliser de capteurs spécifiques pour effectuer ces opérations de référencement.

Un procédé selon le préambule de la revendication 1 est connu du document DE-A-4 017 856.

Le domaine de l'invention est, d'une façon générale, celui des projecteurs de véhicule automobile. Dans ce domaine, on connaît différents types de projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs perfectionnés, dits bimodes, qui cumulent les fonctions de feux de croisement et de feu de route en incorporant un cache amovible ;
- des feux anti-brouillard.

Cependant, les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions. Ainsi, par exemple, lorsqu'un véhicule aborde un virage, les projecteurs continuent à éclairer droit devant eux alors qu'il serait plus judicieux d'orienter le faisceau lumineux dans la direction du virage emprunté. C'est pourquoi, en complément des fonctions projecteurs principales classiques, notamment codes et routes, différents perfectionnements sont progressivement apparus. On a ainsi vu se développer des fonctions élaborées, dites fonctions AFS, parmi lesquelles on trouve notamment une fonction dite DBL (Dynamic Bending Light en anglais pour lumière virage mobile), qui permet de modifier l'orientation d'un faisceau lumineux produit par une source lumineuse, de telle sorte que lorsque le véhicule aborde un virage, la route soit éclairée de façon optimale.

Un exemple de réalisation de dispositif projecteur assurant cette fonction consiste à disposer le projecteur considéré dans un boîtier qui comporte une platine extérieure susceptible de pivoter, entraînant ainsi un déplacement du faisceau lumineux associé à ces projecteurs. Le plus souvent, la platine comporte trois points de fixation, qui sont autant de points de contact pour faire pivoter cette platine. Ils permettent ainsi un réglage latéral pour réaliser la fonction DBL. Un tel exemple de réalisation peut également permettre un réglage horizontal pour régler la hauteur d'un faisceau lumineux et réaliser ainsi une correction d'assiette. Un des points de contact est le plus souvent utilisé comme point de pivotement pour permettre les mouvements latéraux ou horizontaux.

Ce sont des axes de sortie moteur, ou actionneurs, disposés à proximité des points de contact, ou des tiges associées à des systèmes purement mécaniques, qui servent d'intermédiaire mécanique pour contrôler le basculement des platines. Dans d'autres exemples de réalisation de dispositifs projecteurs orientables, on peut faire pivoter directement les réflecteurs des dispositifs réflecteurs, sans platine intermédiaire, et toujours par l'intermédiaire de tiges de moteurs ou de systèmes mécaniques.

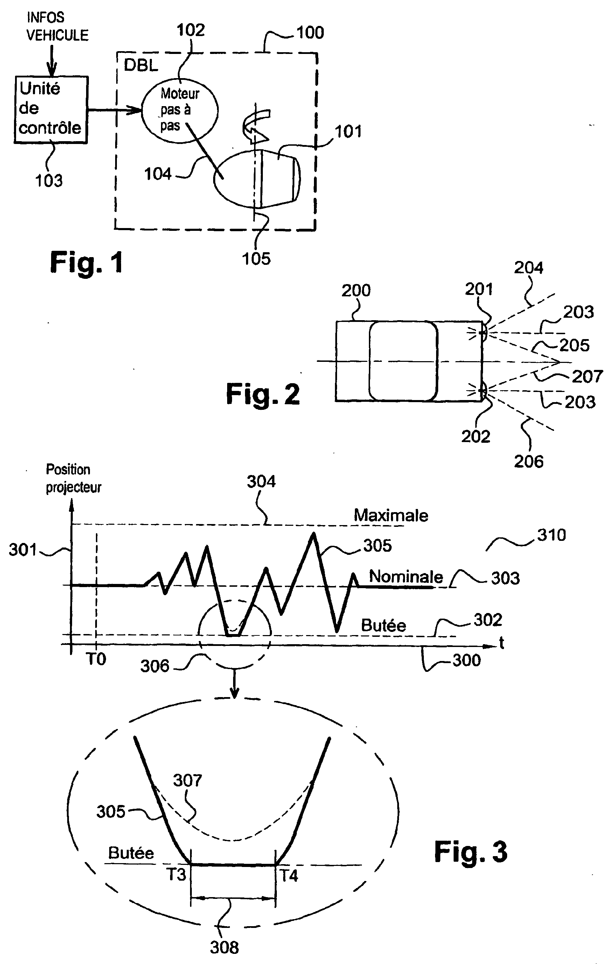

Les actionneurs utilisés dans ce type d'applications sont des moteurs de type pas à pas. En effet, les moteurs dits à courant continu, qui sont traditionnellement utilisés dans les dispositifs projecteurs avec des sources lumineuses de type lampe halogène, ne sont pas assez résistants pour supporter le nombre de cycles imposés par le fonctionnement des dispositifs projecteurs considérés. La figure 1 illustre schématiquement le fonctionnement d'un système projecteur couramment utilisé pour réaliser une fonction DBL, et éventuellement une correction d'assiette.

A la figure 1, un système projecteur 100, dit de type DBL car capable de réaliser cette fonction, comporte essentiellement un dispositif projecteur 101 associé à un moteur pas à pas 102. Le fonctionnement du moteur pas à pas est géré par une unité de contrôle 103, le plus souvent une carte électronique de commande. L'unité de contrôle 103 reçoit un ensemble d'informations du véhicule, telles qu'une information d'angle volant et une information de vitesse ; ces informations sont interprétées par l'unité de contrôle 103, qui transmet alors au moteur 102 des commandes de mouvement pas à pas. Ces commandes de mouvement pas à pas se traduisent par la mise en mouvement de translation, éventuellement accompagné d'un mouvement de rotation, d'un axe de sortie moteur, matérialisé par exemple par une tige moteur, 104 reliant le moteur pas à pas 102 au dispositif projecteur 101, ledit mouvement permettant de faire pivoter le dispositif projecteur 101 autour d'un axe de rotation 105.

Le dispositif projecteur 101 ne peut ainsi évoluer qu'entre des positions parfaitement définies, chacune des positions correspondant à un nombre de pas effectués par l'axe de sortie moteur 104. Dans des exemples particuliers de réalisation, chaque pas de l'axe de sortie moteur 104 correspond à une rotation de 0,1 degrés cette rotation se traduisant par un mouvement de translation de la tige moteur 104 de l'ordre de 33 microns. Dans certains exemples, on utilise des moteurs pas à pas 102 qui peuvent comporter 300 pas, l'axe de sortie moteur 104 pouvant ainsi évoluer sur une dizaine de millimètres.

Théoriquement, un dénombrement du nombre de pas commandés est suffisant pour déterminer avec précision la position de l'axe de sortie moteur 104, et ainsi l'orientation du dispositif projecteur 101. Cependant deux problèmes principaux se posent avec l'utilisation de systèmes projecteurs faisant intervenir des moteurs pas à pas. Un premier problème réside dans le fait qu'un certain nombre de pas peuvent être "perdus" lors du fonctionnement du système projecteur, essentiellement pour des raisons mécaniques. La connaissance de la position de l'axe de sortie moteur devient alors imparfaite, et se dégrade ainsi au fil du temps. Un autre problème réside dans le fait que, à la mise sous tension, il faut pouvoir déterminer rapidement et sans ambiguïté la position initiale de l'axe de sortie moteur afin de maîtriser par la suite son état d'avancement.

L'utilisation de capteurs de recopie pour déterminer, à chaque instant, une position de la tige de sortie est exclue car trop onéreuse du fait de l'ajout obligatoire d'au moins trois fils conducteurs pour pouvoir alimenter et relire en permanence le capteur utilisé dans le système de recopie. Par ailleurs, l'endurance des systèmes de recopie exigée par les moteurs pas à pas est un critère difficile à atteindre.

La solution la plus souvent retenue dans l'état de la technique est schématiquement illustrée à la figure 2. Sur cette figure, on a représenté un véhicule 200 en vue de dessus, ledit véhicule étant équipé d'un premier dispositif projecteur 201 et d'un deuxième dispositif projecteur 202 respectivement disposés sur le côté gauche et sur le côté droit de la face avant du véhicule 200. Lorsque le véhicule 200 roule en ligne droite, l'orientation des dispositifs projecteurs 201 et 202 est telle que le faisceau lumineux qu'ils produisent est centré sur une position nominale 203. Par abus de langage, on dit alors que le dispositif projecteur est dans une position nominale. Le dispositif projecteur 201 peut évoluer entre une première position maximale 204, orientée vers le côté de la route correspondant au côté où est placé le dispositif projecteur 201 sur la face avant du véhicule, et une deuxième position maximale 205, antagoniste à la première position maximale, orientée vers le centre de la route. Les deux positions maximales 204 et 205 correspondent aux déplacements maxima que peut effectuer l'axe de sortie moteur 104 au sein du système projecteur 100, ces déplacements maxima étant imités par des positions de butée de l'axe de sortie moteur 104. De la même façon, on définit pour le deuxième dispositif projecteur 202 une première position maximale 206 et une deuxième position maximale 207.

Dans la solution habituelle de l'état de la technique, à chaque mise sous tension du système projecteur, on procède à une initialisation du moteur pas à pas 102 par une mise en butée de l'axe de sortie moteur 104 afin que l'unité de contrôle 103 du moteur pas à pas 100 puisse connaître avec précision la position ultérieure de l'axe de sortie moteur 104. C'est à l'instant précis où l'axe de sortie moteur 104 est dans une position de butée que l'unité de contrôle 103 prend connaissance de la position de l'axe de sortie moteur 104, et dispose ainsi d'un référencement indispensable pour le contrôle ultérieur de la position de l'axe de sortie moteur 104. Le plus souvent, ce sont les premières positions maximales 204 et 206 qui sont choisies comme position de butée.

Mais cette solution pose un ensemble de problèmes. Tout d'abord, le fait de devoir atteindre une position de butée a pour effet d'orienter le faisceau lumineux issu du dispositif projecteur dans une position limite qui d'une part est gênante pour le conducteur du véhicule, et qui d'autre part risque d'éblouir d'autres automobilistes.

Ensuite, le temps de la mise en service effectif du dispositif projecteur est long, environ deux secondes, l'axe de sortie moteur 104 devant être en moyenne déplacé de la moitié de sa longueur pour atteindre sa position de butée, puis devant adopter une position nominale de fonctionnement qui est assurément différente de sa position de butée.

Enfin, cette solution impose inutilement une initialisation du moteur pas à pas à chaque mise sous tension du dispositif projecteur, alors qu'il y a peu de chances que le dispositif projecteur ait été éteint dans une position non nominale : en effet, un dispositif projecteur est ramené dans sa position nominale dès que la vitesse du véhicule est inférieure à 5 kilomètres par heure. Pour qu'un dispositif projecteur soit immobilisé dans une position non nominale, il faut donc que l'alimentation du moteur ait été coupée alors que le véhicule roulait à plus de 5 kilomètres par heure et dans un virage de nuit. Ce rare cas de figure peut intervenir lors d'une coupure accidentelle de la batterie du moteur pas à pas, ou d'un retrait intempestif de la clé de contact. De plus, l'initialisation forcée à chaque mise sous tension résout un éventuel problème de perte de pas qui aurait eu lieu lors du cycle de fonctionnement précédent du dispositif projecteur, mais ne résout pas les problèmes de perte de pas qui sont susceptibles d'apparaître lors du nouveau cycle de fonctionnement du dispositif projecteur ; un cycle de fonctionnement étant défini comme une période comprise entre une mise sous tension et l'extinction suivante du système projecteur.

L'objet de l'invention répond aux problèmes qui viennent d'être exposés. D'une façon générale, on propose dans l'invention un procédé de référencement d'un dispositif projecteur qui n'est pas systématiquement mis en oeuvre à chaque mise sous tension du dispositif projecteur considéré, mais uniquement lorsque l'orientation du dispositif projecteur avoisine une valeur limite, proche d'une position de butée. La mise en butée se traduit alors par une faible, et donc de courte durée, déviation de la trajectoire du dispositif projecteur attendue, par le conducteur. La gêne est ainsi minimisée, et le référencement rapide. La périodicité des opérations de référencement peut être limitée par différents critères. Le procédé de référencement peut par ailleurs prévoir, sous certaines conditions particulières et peu fréquentes, des phases d'initialisation du dispositif projecteur considéré, permettant de connaître une position initiale d'un dispositif projecteur à la mise sous tension.

D'une façon générale, le procédé selon l'invention pourra être mis en oeuvre avec l'ensemble des éléments projecteurs incorporant des moteurs pas à pas, indépendamment de la mesure de leur pas, et que l'axe de sortie moteur soit accompagné dans son mouvement de translation d'un mouvement de rotation ou non. Par ailleurs, si les moteurs pas à pas sont essentiellement utilisés dans l'état de la technique avec des dispositifs projecteurs de type feux de croisement, il est évident que l'objet de l'invention peut être adapté à tout autre dispositif faisant intervenir des moteurs pas à pas, et notamment tout dispositif projecteur autre que des feux de croisement avec une source lumineuse de type lampe à Xénon.

L'invention concerne donc essentiellement un procédé de référencement d'un ensemble projecteur comportant notamment un dispositif projecteur mobile autour d'un axe de rotation, un moteur pas à pas, commandé par une unité de contrôle et comportant une liaison mécanique pour assurer une transmission de mouvement entre ledit moteur pas à pas et le dispositif projecteur mobile, caractérisé en ce que le procédé comporte au moins l'étape consistant à effectuer une opération de référencement de la position du dispositif projecteur mobile, consistant à amener le dispositif projecteur mobile en butée contre une position de référence, lorsque un angle de position instantanée, défini entre une direction instantanée du dispositif projecteur et la position de référence, est inférieur à un angle de déclenchement de référencement préalablement déterminé.

Le procédé selon l'invention peut, outre les caractéristiques principales énoncées dans le paragraphe précédent, présenter une ou plusieurs des caractéristiques supplémentaires suivantes :
- la position de référence correspond à un déplacement maximal en rotation du dispositif projecteur dans une direction correspondant à un éclairage maximal d'un côté du véhicule où est disposé le dispositif projecteur.
- l'étape consistant à effectuer l'opération de référencement est accomplie au plus une fois par cycle de fonctionnement de l'ensemble projecteur.
- l'étape consistant à effectuer l'opération de référencement est accomplie au plus une fois dans un intervalle de temps préalablement déterminé.
- le procédé comporte l'étape supplémentaire consistant à, préalablement à tout mouvement du dispositif projecteur mobile lors d'un cycle de fonctionnement, mémoriser, dans un module de mémoire de l'unité de contrôle, une information relative à une position non nominale du dispositif projecteur.
- le module de mémoire est de type EEPROM.
- l'étape consistant à mémoriser une information relative à une position non nominale est accomplie au moins lors du premier mouvement du dispositif projecteur mobile lors d'un cycle de fonctionnement.
- le procédé comporte l'étape supplémentaire consistant à, ultérieurement à la mémorisation de l'information relative à la position non nominale du dispositif projecteur, mémoriser dans le module de mémoire une information relative à une position nominale du dispositif projecteur lorsque ledit dispositif projecteur est revenu dans la position nominale pendant une durée d'immobilité préalablement déterminée.
- l'étape consistant à mémoriser une information relative à une position non nominale est accomplie lors de la mise sous tension de l'ensemble projecteur.
- le procédé comporte l'étape supplémentaire consistant à mémoriser dans le module de mémoire une information uniquement lorsque l'unité de contrôle détecte une chute de tension supérieure à une valeur critique préalablement déterminée et que le dispositif projecteur est dans une position nominale, l'information mémorisée étant alors relative à une position instantanée nominale du dispositif projecteur.
- le procédé comporte les différentes étapes supplémentaires consistant à :
   - à chaque mise sous tension de l'élément projecteur, lire l'information de position du dispositif projecteur ayant fait l'objet d'une dernière mémorisation;
   - si l'information de position est une information de position non nominale, accomplir une opération d'initialisation du dispositif projecteur, consistant à amener le dispositif projecteur mobile en butée contre la position de référence.
- l'étape consistant à effectuer une opération de référencement de la position du dispositif projecteur mobile est effectuée brièvement.

Un autre objet de l'invention est un véhicule automobile équipé d'un système projecteur capable de mettre en oeuvre le procédé précédemment énoncé avec ses caractéristiques principales, et éventuellement au moins une des caractéristiques supplémentaires qui viennent d'être mentionnées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention.
- à la figure 1, déjà décrite, un système projecteur équipé d'un moteur pas à pas;
- à la figure 2, également déjà décrite, une représentation schématique d'un véhicule et des orientations limites de ses dispositifs projecteurs ;
- à la figure 3, un chronogramme illustrant l'évolution de la position du dispositif projecteur lors de la mise en oeuvre du procédé selon l'invention ;
- à la figure 4, un chronogramme illustrant un exemple de mise en oeuvre du procédé selon l'invention avec enregistrement d'un état du dispositif projecteur à chaque changement de son état;
- à la figure 5, un chronogramme illustrant un premier cas de figure d'un exemple de mise en oeuvre du procédé selon l'invention avec enregistrement d'un état du dispositif projecteur à chaque mise hors-tension;
- à la figure 6, un chronogramme illustrant un deuxième cas de figure d'un exemple de mise en oeuvre du procédé selon l'invention avec enregistrement d'un état du dispositif projecteur à chaque mise hors-tension;
- à la figure 7, un organigramme illustrant un exemple de mise en oeuvre du procédé selon l'invention.

Sur les différentes figures, les éléments qui sont communs à plusieurs figures auront conservé les mêmes références.

Les chronogrammes des figures 3 à 6 ont tous un axe des temps 300 en abscisse, et une mesure d'un angle de rotation du dispositif projecteur 101 correspondant donc à une position du dispositif projecteur, compris dans le système projecteur 100 DBL, en ordonnée 102. La position du dispositif projecteur 101 peut évoluer entre une position maximale, représentée par un premier trait horizontal en pointillés 304, et une position de butée, représentée par un deuxième trait horizontal en pointillés 302. La position nominale du dispositif projecteur 101 est repérée par un troisième trait horizontal en pointillés 303. Un instant T0 repère la mise sous tension de l'élément projecteur 300. Une courbe 305 en traits pleins représente l'évolution de la position du dispositif projecteur lors de la mise en oeuvre du procédé selon l'invention.

La figure 3 montre un chronogramme 310, où une zone 306 est représentée plus en détails sous le chronogramme 310. La zone 306 comporte d'une part, en traits pleins, une portion de la courbe 305 représentant l'évolution de la position du dispositif projecteur 101 lors de la mise en oeuvre du procédé selon l'invention, et d'autre part, une portion de courbe 307, représentée en traits pointillés. La portion de courbe 307 correspond à l'évolution de la position du dispositif projecteur 101 dans l'état de la technique, c'est à dire avant la mise en oeuvre du procédé selon l'invention.

Dans la zone 306, on constate que, dans l'état de la technique, la position du dispositif projecteur 101 aurait été proche de sa position de butée. Dans le procédé selon l'invention, on profite de cette proximité pour effectuer une opération de référencement du dispositif projecteur considéré.

Pendant l'opération de référencement, l'unité de contrôle 103 force le dispositif projecteur à venir en butée pendant une durée 308 comprise entre des instants T3 et T4. La déviation non commandée par la fonction DBL, mais essentielle dans le procédé selon l'invention, occasionne ainsi pour le dispositif projecteur une modification de trajectoire, par rapport à celle observée dans l'état de la technique, de très faible amplitude et d'une durée très courte ; la durée 308 est limitée à une durée nécessaire à l'unité de contrôle pour détecter la mise en butée du dispositif projecteur. Cette durée est inférieure à 0,5 seconde. L'opération de référencement s'achève après l'instant T4 en replaçant le dispositif projecteur dans sa position habituelle, c'est à dire dans la position qu'il aurait occupé s'il n'avait pas subi de modification de trajectoire pour effecteur le référencement. Une telle modification de trajectoire permet notamment de s'affranchir des problèmes de perte de pas du moteur pas à pas 102. On parle ainsi de référencement dynamique car l'opération de référencement est effectuée pendant un cycle de fonctionnement du dispositif projecteur, et pendant que celui-ci est en mouvement.

Dans le procédé selon l'invention, on prévoit, selon les cas, soit d'effectuer au plus une opération de référencement par cycle de fonctionnement du dispositif projecteur considéré, soit d'effecteur au plus une opération de référencement pendant une durée prédéterminée de mise sous tension du dispositif projecteur, ladite durée pouvant éventuellement s'étaler sur plusieurs cycles de fonctionnement, ou être mesurée à partir de chaque nouvelle mise sous tension.

Le procédé selon l'invention peut avantageusement être complété par la mise en oeuvre d'opérations d'initialisation. Une opération d'initialisation se différencie d'une opération de référencement par le fait qu'elle ne peut intervenir qu'à la mise sous tension du dispositif considéré. Une opération d'initialisation consiste, tout comme une opération de référencement, à amener le dispositif projecteur mobile en butée contre une position de référence. Une fois que le dispositif projecteur a été mis en butée contre la position de référence, il est alors placé, à l'issue d'une opération d'initialisation, dans sa position nominale ou dans la position imposée par la fonction DBL, l'unité de contrôle 103 connaissant alors avec certitude le nombre de pas à effectuer. Comme il l'a été expliqué précédemment, les conditions à réunir pour qu'une opération d'initialisation intervienne sont telles que les opérations d'initialisation réellement utiles, qui sont celles conservées dans le procédé selon l'invention, sont peu fréquentes. Les chronogrammes 4 à 6 illustrent différentes solutions pour la mise en oeuvre d'opérations d'initialisation.

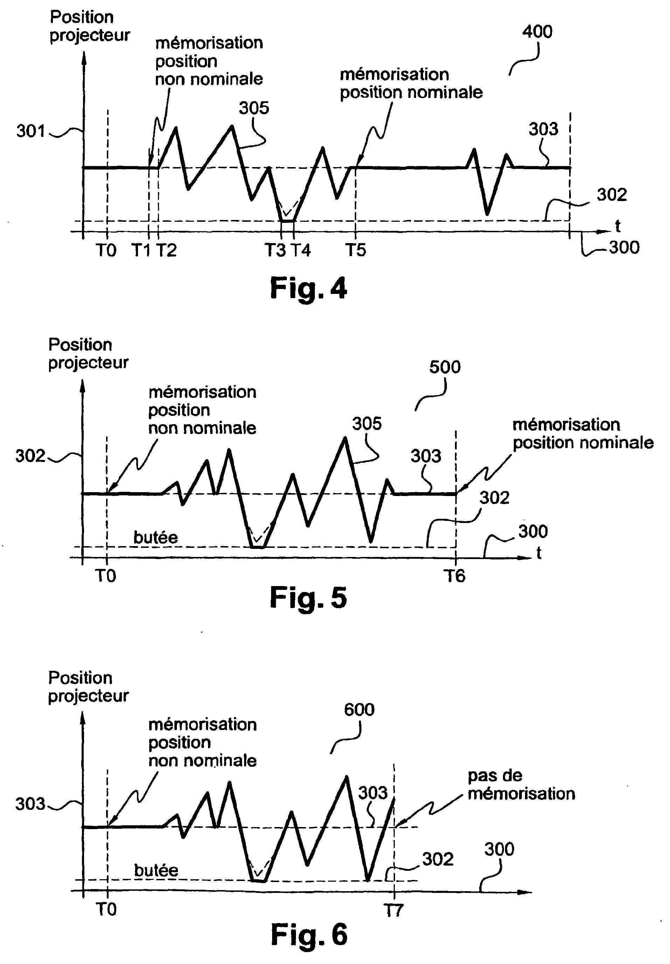

Dans un premier exemple, illustré à la figure 4 par un chronogramme 400, on prévoit un enregistrement, dans une mémoire d'un calculateur de l'unité de contrôle 103, d'une information d'état à chaque changement d'état de l'ensemble projecteur 100. La mémoire du calculateur doit être du type non volatile pour ne pas perdre, lors d'une coupure d'alimentation par exemple due à l'arrêt du véhicule, les informations qu'elle mémorise. On choisit donc une mémoire de type EEPROM.

Une information d'état peut soit désigner que le dispositif projecteur est dans sa position nominale, soit qu'il est dans une position non nominale. Un changement d'état correspond donc soit au passage d'une position nominale à une position non nominale, soit au passage d'une position non nominale à une position nominale. L'information de position nominale ou non nominale peut être fournie par un capteur, dont la présence au sein du système projecteur est imposée par les différentes réglementation. Ce capteur n'est pas un capteur de recopie ; il ne permet pas, à chaque instant, de connaître précisément l'orientation du dispositif projecteur ; il est capable de détecter des incohérences flagrantes entre une position instantanée du dispositif projecteur et des commandes de mouvement envoyées par l'unité de contrôle. Il permet de détecter, à quelques éventuelles pertes de pas près qui sont corrigées par ailleurs par le procédé de référencement dynamique selon l'invention, si le dispositif projecteur est dans sa position nominale ou non.

Lorsque l'unité de contrôle 103 reçoit, à un instant T1, une information pour faire quitter au dispositif projecteur la position nominale, elle procède, avant tout mouvement du moteur pas à pas 102, à l'enregistrement dans la mémoire du calculateur, d'une information d'état relative à une position non nominale. Le moteur 102 entre effectivement en mouvement à un instant T2, la durée entre les instants T1 et T2 étant la durée nécessaire pour réaliser une opération d'écriture dans la mémoire du calculateur. A l'échelle du conducteur, cette durée est négligeable.

Lorsque le dispositif projecteur atteint de nouveau sa position nominale à un instant ultérieur T5, on procède à l'enregistrement dans la mémoire du calculateur, d'une information d'état relative à une position non nominale. Dans un mode particulier de mise en oeuvre du procédé selon l'invention, on attend que le dispositif projecteur ait atteint sa position nominale depuis une certaine durée, par exemple une seconde, avant de procéder à une telle mémorisation.

Lors de la mise sous tension de l'ensemble projecteur 100, on ne procède à une opération d'initialisation que si l'information mémorisée est relative à une position non nominale. Ce premier exemple privilégie l'écriture de la position non nominale, afin qu'il soit impossible d'écrire dans la mémoire que le dispositif projecteur est en position nominale alors qu'il ne l'est pas. On évite ainsi le pire cas de défaillance envisageable, qui serait qu'à la mise sous tension, la dernière information mémorisée soit relative à une position nominale du dispositif projecteur alors qu'il est dans une position autre. Si par contre l'écriture de la position nominale du dispositif projecteur est erronée, alors, à la mise sous tension suivante, le système projecteur subit une opération d'initialisation et retrouve ainsi un fonctionnement normal.

Un inconvénient de ce premier exemple réside dans le fait qu'il nécessite un nombre important d'opérations d'écriture dans la mémoire de type EEPROM, qui doit en conséquence être de taille importante.

Dans un deuxième exemple, illustré aux figures 5 et 6, respectivement par un chronogramme 500 et un chronogramme 600, on prévoit un enregistrement, dans la mémoire d'un calculateur de l'unité de contrôle 103, d'une information d'état à chaque mise hors tension de l'unité de contrôle 103. On limite ainsi le nombre d'écriture en mémoire.

Le principe du deuxième exemple est le suivant : à chaque mise sous tension de l'unité de contrôle 103, quelle que soit la position du dispositif projecteur, l'information "position non nominale" est enregistrée à titre de sécurité. Lorsqu'une chute de tension est détectée, et que le dispositif projecteur est en position nominale, alors l'information "position nominale" est enregistrée. L'écriture ne se fait donc qu'en cas de coupure d'alimentation, et lorsque le dispositif projecteur est en position nominale, c'est à dire lorsque les moteurs pas à pas sont le moins sollicités, laissant une réserve d'énergie suffisante dans l'unité de contrôle 103 pour procéder à l'enregistrement. Ainsi, à la figure 5, en considérant les courbes 305 de position du dispositif projecteur, après avoir mémorisé une position non nominale à l'instant T0 correspondant à la mise sous tension, on mémorise à un instant T6, correspondant à une mise hors tension, l'information "position nominale" ; au contraire, à la figure 6, après avoir mémorisé une position non nominale à l'instant T0 correspondant à la mise sous tension, on ne mémorise à un instant T7, correspondant à une mise hors tension, aucune information.

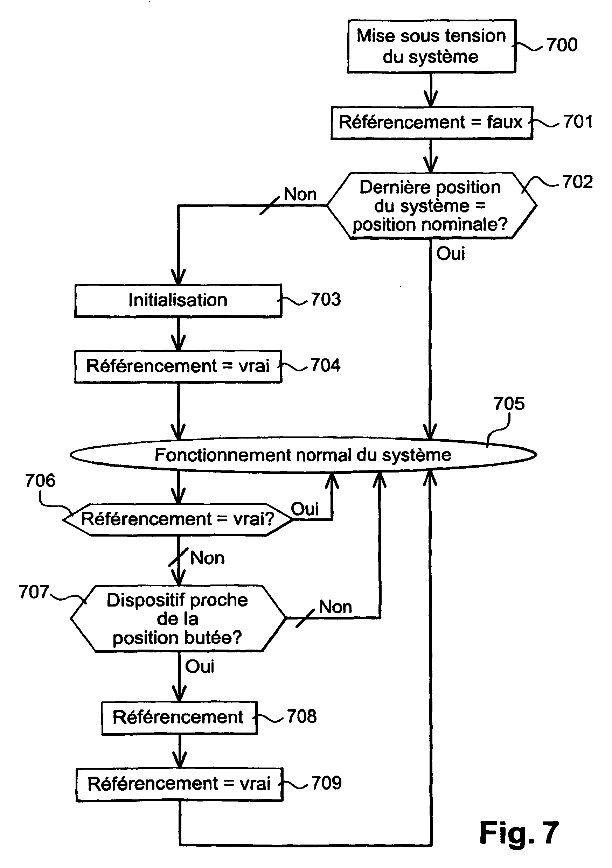

La figure 7 montre un organigramme qui permet de récapituler les principales étapes d'un exemple de mise en oeuvre du procédé selon l'invention.

Une première étape 700, qui marque le début de l'organigramme, consiste en la mise sous tension du système projecteur 100. L'unité de contrôle 103 considère alors, dans une étape 701, qu'aucune opération de référencement n'a été réalisée jusqu'alors, en affectant la valeur "faux" à une variable référencement. Une étape de décision 702 suit alors, dans laquelle l'unité de contrôle 103 lit le module de mémoire pour prendre connaissance de la dernière information d'état enregistrée pour le dispositif projecteur 101. Si cette information correspond à une position non nominale du dispositif projecteur, alors on procède dans une étape 703 à une opération d'initialisation du dispositif projecteur, et la variable référencement prend, dans une étape 704, la valeur "vrai", qui traduit le fait qu'une opération de référencement ou d'initialisation a été effectuée depuis la dernière mise sous tension. On passe alors à une étape 705 de fonctionnement normal du système projecteur, étape à laquelle on accède directement à l'issue de l'étape de décision 702 si la dernière information d'état enregistrée dans la mémoire du calculateur correspond à une position nominale du dispositif projecteur.

Une étape de décision 706 intervient alors, dans laquelle l'unité de contrôle 103 vérifie la valeur de la variable référencement. Si cette variable a pour valeur "vrai", alors le fonctionnement normal de l'ensemble projecteur se poursuit dans l'étape 705. Si cette variable a pour valeur "faux", alors une étape de décision 707 intervient dans laquelle le calculateur détermine si le dispositif projecteur est proche de sa position de butée. Si ce n'est pas le cas, alors le fonctionnement normal de l'ensemble projecteur se poursuit dans l'étape 705. Si c'est le cas, une étape 708 de référencement dynamique est alors exécutée en amenant brièvement le dispositif projecteur dans sa position de butée. Une étape 709 intervient alors, dans laquelle la variable référencement prend la valeur "vrai", puis le fonctionnement normal de l'ensemble projecteur se poursuit dans l'étape 705.

Pour déterminer si le dispositif projecteur est proche de sa position de butée, on considère la valeur d'un angle de position instantanée, défini entre une direction instantanée du dispositif projecteur et la position de référence (ou position de butée), et on détermine si cet angle est inférieur à un angle de déclenchement de référencement préalablement déterminé. L'angle de déclenchement peut par exemple correspondre à dix pour cent de la totalité d'une plage de rotation possible, définie entre la position de butée et la position maximale antagoniste à la position de butée, pour le dispositif projecteur considéré. L'angle de déclenchement de référencement peut être variable en fonction d'une vitesse instantanée du véhicule, en prenant une valeur plus élevée lorsque le véhicule roule à faible allure.

Dans l'étape 705, correspondant au fonctionnement normal de l'ensemble projecteur, la variable référencement peut changer de valeur en passant de la valeur "vrai" à la valeur "faux". Ce changement de valeur est géré par l'unité de contrôle 103 ; la fréquence de ce changement est préalablement déterminé ; il peut intervenir à des intervalles de temps régulièrement espacés pendant le fonctionnement du système projecteur, et/ou être limité à un certain nombre de fois, par exemple une fois, par cycle de fonctionnement.

## Revendications

1. Procédé de référencement d'un ensemble projecteur (100) comportant un dispositif projecteur (101) mobile autour d'un axe de rotation (105), un moteur pas à pas (102), commandé par une unité de contrôle (103) et comportant une liaison mécanique (104) pour assurer une transmission de mouvement entre ledit moteur pas à pas (102) et le dispositif projecteur mobile (101), **caractérisé en ce que** le procédé comporte au moins l'étape consistant à effectuer une opération de référencement (708) de la position du dispositif projecteur mobile (101), consistant à amener le dispositif projecteur mobile (101) en butée contre une position de référence, lorsque un angle de position instantanée, défini entre une direction instantanée du dispositif projecteur et la position de référence, est inférieur à un angle de déclenchement de référencement préalablement déterminé.

2. Procédé de référencement d'un ensemble projecteur selon la revendication précédente **caractérisé en ce que** la position de référence correspond à un déplacement maximal en rotation du dispositif projecteur dans une direction correspondant à un éclairage maximal d'un côté d'un véhicule où est disposé le dispositif projecteur.

3. Procédé de référencement d'un ensemble projecteur selon l'une au moins des revendications précédentes **caractérisé en ce que** l'étape consistant à effectuer l'opération de référencement est accomplie au plus une fois par cycle de fonctionnement de l'ensemble projecteur.

4. Procédé de référencement d'un ensemble projecteur selon l'une au moins des revendications 1 ou 2 **caractérisé en ce que** l'étape consistant à effectuer l'opération de référencement est accomplie au plus une fois dans un intervalle de temps préalablement déterminé.

5. Procédé de référencement d'un ensemble projecteur selon l'une au moins des revendications précédentes **caractérisé en ce qu'**il comporte l'étape supplémentaire consistant à, préalablement à tout mouvement du dispositif projecteur mobile lors d'un cycle de fonctionnement, mémoriser, dans un module de mémoire de l'unité de contrôle, une information relative à une position non nominale du dispositif projecteur.

6. Procédé de référencement d'un ensemble projecteur selon la revendication précédente **caractérisé en ce que** le module de mémoire est de type EEPROM.

7. Procédé de référencement d'un ensemble projecteur selon l'une au moins des revendications 5 ou 6 **caractérisé en ce que** l'étape consistant à mémoriser une information relative à une position non nominale est accomplie au moins avant le premier mouvement du dispositif projecteur mobile lors d'un cycle de fonctionnement.

8. Procédé de référencement d'un ensemble projecteur selon la revendication précédente **caractérisé en ce qu'**il comporte l'étape supplémentaire consistant à, ultérieurement à la mémorisation de l'information relative à la position non nominale du dispositif projecteur, mémoriser dans le module de mémoire une information relative à une position nominale du dispositif projecteur lorsque ledit dispositif projecteur est revenu dans la position nominale pendant une durée d'immobilité préalablement déterminée.

9. Procédé de référencement d'un ensemble projecteur selon l'une au moins des revendications 5 ou 6**caractérisé en ce que** l'étape consistant à mémoriser une information relative à une position non nominale est accomplie lors de la mise sous tension de l'ensemble projecteur.

10. Procédé de référencement d'un ensemble projecteur selon la revendication précédente **caractérisé en ce qu'**il comporte l'étape supplémentaire consistant à mémoriser dans le module de mémoire une information uniquement lorsque l'unité de contrôle détecte une chute de tension supérieure à une valeur critique préalablement déterminée et que le dispositif projecteur est dans une position nominale, l'information mémorisée étant alors relative à une position instantanée nominale du dispositif projecteur.

11. Procédé de référencement d'un ensemble projecteur selon l'une au moins des revendications 5 à 10 **caractérisé en ce qu'**il comporte les différentes étapes supplémentaires consistant à :
- à chaque mise sous tension de l'élément projecteur, lire l'information de position du dispositif projecteur ayant fait l'objet d'une dernière mémorisation;
- si l'information de position est une information de position non nominale, accomplir une opération d'initialisation du dispositif projecteur, consistant à amener le dispositif projecteur mobile en butée contre la position de référence.

12. Procédé selon l'une au moins des revendications précédentes **caractérisé en ce que** l'étape consistant à effectuer une opération de référencement (708) de la position du dispositif projecteur mobile (101) est effectuée brièvement.

13. Véhicule automobile équipé d'un système projecteur capable de mettre en oeuvre le procédé selon l'une au moins des revendications précédentes.

## Patentansprüche

1. Verfahren zur Referenzierung einer Scheinwerfereinheit (100) mit einer um eine Drehachse (105) beweglichen Scheinwerferanordnung (101), einem Schrittmotor (102), der durch eine Steuereinheit (103) gesteuert wird und eine mechanische Verbindung (104) aufweist, um zwischen dem Schrittmotor (102) und der beweglichen Scheinwerferanordnung (101) eine Bewegungsübertragung zu gewährleisten,
**dadurch gekennzeichnet, dass** das Verfahren wenigstens den Schritt umfasst, der darin besteht, einen Vorgang zur Referenzierung (708) der Position der beweglichen Scheinwerferanordnung (101) durchzuführen, der darin besteht, die bewegliche Scheinwerferanordnung (101) gegen eine Referenzposition in Anschlag zu bringen, wenn ein Winkel der Momentanposition, der zwischen einer Momentanrichtung der Scheinwerferanordnung und der Referenzposition gebildet ist, kleiner ist als ein zuvor bestimmter Winkel zum Auslösen der Referenzierung.

2. Verfahren zur Referenzierung einer Scheinwerfereinheit nach dem vorhergehenden Anspruch,
**dadurch gekennzeichnet, dass** die Referenzposition einer maximalen Drehbewegung der Scheinwerferanordnung in einer Richtung entspricht, die einer maximalen Beleuchtung auf einer Seite eines Fahrzeugs entspricht, an der die Scheinwerferanordnung sich befindet.

3. Verfahren zur Referenzierung einer Scheinwerfereinheit nach wenigstens einem der vorhergehenden Ansprüche,
**dadurch gekennzeichnet, dass** der Schritt zur Durchführung des Referenzierungsvorgangs höchstens einmal pro Betriebszyklus der Scheinwerfereinheit erfolgt.

4. Verfahren zur Referenzierung einer Scheinwerfereinheit nach wenigstens einem der vorhergehenden Ansprüche 1 oder 2,
**dadurch gekennzeichnet, dass** der Schritt zur Durchführung des Referenzierungsvorgangs höchstens einmal innerhalb eines vorab bestimmten Zeitabschnitts erfolgt.

5. Verfahren zur Referenzierung einer Scheinwerfereinheit nach wenigstens einem der vorhergehenden Ansprüche,
**dadurch gekennzeichnet, dass** es den zusätzlichen Schritt umfasst, der darin besteht, vor jeder Bewegung der beweglichen Scheinwerferanordnung in einem Betriebszyklus eine Information bezüglich einer nicht nominalen Position der Scheinwerferanordnung in einem Speichermodul der Steuereinheit zu speichern.

6. Verfahren zur Referenzierung einer Scheinwerfereinheit nach dem vorhergehenden Anspruch,
**dadurch gekennzeichnet, dass** das Speichermodul vom Typ eines EEPROM ist.

7. Verfahren zur Referenzierung einer Scheinwerfereinheit nach wenigstens einem der vorhergehenden Ansprüche 5 oder 6,
**dadurch gekennzeichnet, dass** der Schritt zur Speicherung einer Information bezüglich einer nicht nominalen Position wenigstens vor der ersten Bewegung der beweglichen Scheinwerferanordnung in einem Betriebszyklus erfolgt.

8. Verfahren zur Referenzierung einer Scheinwerfereinheit nach dem vorhergehenden Anspruch,
**dadurch gekennzeichnet, dass** es den zusätzlichen Schritt umfasst, der darin besteht, nach der Speicherung der Information bezüglich der nicht nominalen Position der Scheinwerferanordnung eine Information bezüglich einer nominalen Position der Scheinwerferanordnung in dem Speichermodul zu speichern, wenn die Scheinwerferanordnung während einer vorab bestimmten Immobilitätszeit in die nominale Position zurückgekehrt ist.

9. Verfahren zur Referenzierung einer Scheinwerfereinheit nach wenigstens einem der vorhergehenden Ansprüche 5 oder 6,
**dadurch gekennzeichnet, dass** der Schritt zur Speicherung einer Information bezüglich einer nicht nominalen Position bei der Inbetriebnahme der Scheinwerfereinheit erfolgt.

10. Verfahren zur Referenzierung einer Scheinwerfereinheit nach dem vorhergehenden Anspruch,
**dadurch gekennzeichnet, dass** es den zusätzlichen Schritt umfasst, der darin besteht, in dem Speichermodul eine Information nur dann zu speichern, wenn die Steuereinheit einen Spannungsabfall feststellt, der über einem vorab bestimmten kritischen Wert liegt, und wenn sich die Scheinwerferanordnung in einer nominalen Position befindet, wobei sich die gespeicherte Information dann auf eine nominale Momentanposition der Scheinwerferanordnung bezieht.

11. Verfahren zur Referenzierung einer Scheinwerfereinheit nach wenigstens einem der vorhergehenden Ansprüche 5 bis 10,
**dadurch gekennzeichnet, dass** es die zusätzlichen Schritte umfasst, die darin besteen:
- bei jeder Inbetriebnahme des Scheinwerferelements die Information über die zuletzt gespeicherte Position der Scheinwerferanordnung zu lesen;
- wenn die Positionsinformation eine Information über eine nominale Position ist, einen Vorgang zum Initialisieren der Scheinwerferanordnung auszuführen, der darin besteht, die bewegliche Scheinwerferanordnung gegen die Referenzposition in Anschlag zu bringen.

12. Verfahren nach wenigstens einem der vorhergehenden Ansprüche,
**dadurch gekennzeichnet, dass** der Schritt zur Durchführung eines Vorgangs zur Referenzierung (708) der Position der beweglichen Scheinwerferanordnung (101) kurzzeitig erfolgt.

13. Kraftfahrzeug, ausgestattet mit einem Scheinwerfersystem, das das Verfahren nach wenigstens einem der vorhergehenden Ansprüche durchzuführen vermag.

## Claims

1. Method of referencing a headlight assembly (1) comprising a headlight device (101) able to move about a rotation axis (105), and a stepping motor (102) controlled by a control unit (103) and comprising a mechanical connection (104) for providing a transmission of movement between the said stepping motor (102) and the movable headlight device (101), **characterised in that** the method comprises at least the step consisting of performing an operation (708) of referencing the position of the movable headlight device (101) consisting of bringing the movable headlight device (101) into abutment against a reference position, when an instantaneous position angle, defined between an instantaneous direction of the headlight device and the reference position, is less than a previously determined referencing triggering angle.

2. Method of referencing a headlight assembly according to the preceding claim, **characterised in that** the reference position corresponds to a maximum rotation movement of the headlight device in a direction corresponding to a maximum illumination on a side of a vehicle where the headlight device is disposed.

3. Method of referencing a headlight assembly according to at least one of the preceding claims, **characterised in that** the step consisting of performing the referencing operation is accomplished no more than once per operating cycle of the headlight assembly.

4. Method of referencing a headlight assembly according to at least one of claims 1 or 2, **characterised in that** the step consisting of performing the referencing operation is performed no more than once in a previously determined interval of time.

5. Method of referencing a headlight assembly according to at least one of the preceding claims, **characterised in that** it comprises a supplementary step consisting of, prior to any movement of the movable headlight device during an operating cycle, storing, in a memory module of the control unit, information relating to a non-nominal position of the headlight device.

6. Method of referencing a headlight assembly according to the preceding claim, **characterised in that** the memory module is of the EEPROM type.

7. Method of referencing a headlight assembly according to at least one of claims 5 or 6, **characterised in that** the step consisting of storing information relating to a non-nominal position is performed at least before the first movement of the movable headlight device during an operating cycle.

8. Method of referencing a headlight assembly according to the preceding claim, **characterised in that** it comprises the supplementary step consisting of, subsequently to the storage of the information relating to the non-nominal position of the headlight device, storing in the memory module information relating to a nominal position of the headlight device when the said headlight device has returned to the nominal position for a previously determined period of immobility.

9. Method of referencing a headlight assembly according to at least one of claims 5 or 6, **characterised in that** the step of storing information relating to a non-nominal position is performed when the headlight assembly is powered up.

10. Method of referencing a headlight assembly according to the preceding claim, **characterised in that** it comprises the supplementary step consisting of storing information in the memory module only when the control unit detects a drop in voltage greater than a previously determined critical value and the headlight device is in a nominal position, the information stored then relating to a nominal instantaneous position of the headlight device.

11. Method of referencing a headlight assembly according to at least one of claims 5 to 10, **characterised in that** it comprises the various supplementary steps consisting of:
- each time the headlight element is powered up, reading the position information on the headlight device that was the subject of a last storage;
- if the position information is non-nominal position information, performing an operation of initialising the headlight device, consisting of bringing the movable headlight device into abutment against the reference position.

12. Method of referencing a headlight assembly according to at least one of the preceding claims, **characterised in that** step consisting of performing an operation (708) of referencing the position of the movable headlight device (101) is performed briefly.

13. Motor vehicle equipped with a headlight system capable of implementing the method according to at least one of the preceding claims.
